# EUROPEAN PATENT APPLICATION

(11) **EP 4 458 455 A1**
(43) Date of publication of application: **06.11.2024**
(21) Application number: 22915730.0
(22) Date of filing: 15.12.2022
(51) Int. Cl.: B01D 63/02, B01D 19/00

(54) **DEGASSING MODULE AND METHOD FOR DEGASSING LIQUID**

(30) Priority: 28.12.2021 JP 2021213995
(71) Applicant: DIC Corporation, Tokyo 174-8520 (JP)
(72) Inventor: YAMAMOTO, Wataru, Ichihara-shi, Chiba 290-8585 (JP); MORINO, Akinori, Ichihara-shi, Chiba 290-8585 (JP); KADOKI, Masaya, Ichihara-shi, Chiba 290-8585 (JP)
(74) Representative: TBK
(86) International application number: PCT/JP2022/046122
(87) International publication number: WO 2023/127506

(57) **Abstract**

The pressure loss of liquid is reduced. More specifically, a degassing module 1 includes: a pipe 2 including an in-pipe flow path 23 having a liquid supply port 21 and a liquid discharge port 22, the pipe 2 having a plurality of holes 24 that allow the in-pipe flow path 23 to be open; a hollow fiber membrane group 3 formed by disposing a plurality of hollow fiber membranes 31 on an outer circumferential side of the pipe 2 so as to cover the plurality of holes 24; a housing 4 configured to store the hollow fiber membrane group 3; a partition unit 5 configured to partition a region in the housing 4 into an internal region R1 including an inner circumferential side space 32 of each of the plurality of hollow fiber membranes 31, and an external region R2 including an inter-membrane space S1 between the plurality of hollow fiber membranes 31; an air intake port 41 of the housing 4, the air intake port communicating with the internal region R1; a baffle 6 configured to partition the in-pipe flow path 23 and the inter-membrane space S1 in an extending direction D of the pipe 2; and a supporter 7 disposed on a side of the baffle 6, closer to the liquid discharge port 22, and configured to support at least part of the plurality of hollow fiber membranes 31 against the pipe 2.

## Description

### Technical Field

The present invention relates to a degassing module that degasses liquid and a method of degassing liquid.

### Background Art

A degassing module that degasses liquid using a plurality of hollow fiber membranes has been conventionally known. For example, the contactor described in PTL 1 is known as a degassing module like this. The contactor described in PTL 1 includes: a pipe with open holes; a plurality of hollow fiber membranes surrounding the pipe; a baffle that changes the direction of the flow of liquid; a tube sheet that fixes the ends of the plurality of hollow fiber membranes to the pipe; a shell that stores the plurality of hollow fiber membranes; and an air intake port formed in the shell. In this contactor, when liquid is supplied to the pipe, the liquid flows out from the pipe upstream of the baffle, passes through the inter-membrane space between the plurality of hollow fiber membranes, flows through between the baffle and the shell, and subsequently, passes through the inter-membrane space between the plurality of hollow fiber membranes, and flows into the pipe again downstream of the baffle. In this process, the inner cavity of the hollow fiber membranes is vacuum-sucked through the air intake port, thus the entrained gas in the liquid is moved to the inner cavity-side of the hollow fiber membranes, and the liquid is degassed. The degassed liquid is then discharged from the pipe.

### Citation List

### Patent Literature

PTL 1: Japanese Unexamined Patent Application Publication No. 2003-038904

### Summary of Invention

### Technical Problem

As in the contactor described in PTL 1, providing the degassing module with a baffle can improve the degassing performance of the degassing module. In particular, the effect is significant for a large-sized degassing module.

However, with the contactor described in PTL 1, the plurality of hollow fiber membranes downstream of the baffle are pressed toward the pipe by the flow of the liquid that flows into the pipe again crossing the baffle. As a result, a problem arises in that, for example, the hollow fiber membranes on the outer circumferential side enter between the hollow fiber membranes on the inner circumferential side, and the inter-membrane space between the plurality of hollow fiber membranes, serving as a flow path for liquid is narrowed, thus the pressure loss of the liquid is increased.

Thus, an object of the present invention is to provide a degassing module capable of reducing the pressure loss of liquid, and a method of degassing liquid. Solution to Problem

A degassing module of the present invention includes: a pipe including an in-pipe flow path having a liquid supply port and a liquid discharge port, the pipe having a plurality of holes that allow the in-pipe flow path to be open; a hollow fiber membrane group formed by disposing a plurality of hollow fiber membranes on an outer circumferential side of the pipe so as to cover the plurality of holes; a housing connected to an outer circumferential surface of the pipe and configured to store the hollow fiber membrane group; a partition unit configured to partition a region in the housing into an internal region including an inner circumferential side space of each of the plurality of hollow fiber membranes, and an external region including an inter-membrane space between the plurality of hollow fiber membranes; an air intake port of the housing, the air intake port communicating with the internal region; a baffle configured to partition the in-pipe flow path and the inter-membrane space in an extending direction of the pipe; and a supporter disposed on a side of the baffle, closer to the liquid discharge port in the extending direction, and configured to support at least part of the plurality of hollow fiber membranes against the pipe.

In the degassing module, air is sucked from the internal region through the air intake port, and liquid is supplied from the liquid supply port to the in-pipe flow path, thus liquid can be degassed. The in-pipe flow path and the inter-membrane space are partitioned in the extending direction by the baffle. Therefore, when liquid is supplied from the liquid supply port to the in-pipe flow path, the liquid flows out from the pipe on the liquid supply port side of the baffle, passes through the inter-membrane space, flows through the baffle clearance between the baffle and the housing, passes through the inter-membrane space, and flows into the pipe again on the liquid discharge port side of the baffle. In this manner, as compared to when a baffle is not provided, the degassing performance can be improved by complicating the flow of liquid by the baffle.

Here, at the liquid discharge port of the baffle, the plurality of hollow fiber membranes are pressed toward the pipe by the flow of the liquid that flows into the pipe again crossing the baffle. However, the supporter configured to support at least part of the plurality of hollow fiber membranes against the pipe is disposed at the liquid discharge port of the baffle, which is downstream of the baffle. The inter-membrane space serving as a flow path for the liquid is prevented from being narrowed due to, for example, entering of the hollow fiber membranes on the outer circumferential side into between the hollow fiber membranes on the inner circumferential side caused by the flow of the liquid that flows into the pipe again crossing the baffle. Consequently, as compared to when no supporter is disposed, the pressure loss of the liquid can be reduced.

The supporter may support all of the plurality of hollow fiber membranes against the pipe. Since the supporter supports all of the plurality of hollow fiber membranes against the pipe in the degassing module, it is possible to further prevent the inter-membrane space serving as a flow path for liquid from being narrowed due to the flow of the liquid that flows into the pipe again crossing the baffle.

The supporter may be spaced away from the housing. Since the supporter is spaced away from the housing in the degassing module, the liquid which has crossed the baffle can flow along the inner circumferential surface of the housing until the liquid crosses over the supporter. Thus, on the side of the supporter, closer to the liquid discharge port, that is, downstream of the supporter, the area where the plurality of hollow fiber membranes and the liquid come into contact with each other can be expanded.

The baffle may be spaced away from the housing. Since the baffle is spaced away from the housing in the degassing module, it is possible to reduce the pressure loss of the liquid when the liquid flows through the baffle clearance between the baffle and the housing.

The baffle may partition the entire inter-membrane space in the extending direction. Since the baffle partitions the entire inter-membrane space in the extending direction in the degassing module, on the side of the baffle, closer to the liquid supply port, that is, upstream of the baffle, the liquid which flows out from the pipe can be passed to the outside of the hollow fiber membrane group. Thus, the duration of contact between the plurality of hollow fiber membranes and the liquid can be increased, therefore the degassing efficiency of the liquid can be improved.

A liquid flow space may be formed between the hollow fiber membrane group and the housing, the liquid flow space allowing liquid to flow therethrough. Since a liquid flow space is formed between the hollow fiber membrane group and the housing in the degassing module, the liquid which has flown out from the pipe can flow through the inter-membrane space to enter the liquid flow space, and subsequently, from the liquid flow space, the liquid can flow through the inter-membrane space to enter the pipe. Thus, the pressure loss of the liquid L can be reduced while allowing the liquid to be in contact with the plurality of hollow fiber membranes.

The supporter may not be disposed in the liquid flow space. Since the supporter is not disposed in the liquid flow space in the degassing module, as compared to when the supporter is disposed in the liquid flow space, the pressure loss of the liquid which passes through the liquid flow space can be reduced.

The baffle may include: an inner baffle disposed on the inner circumferential side of the pipe and configured to partition the in-pipe flow path in the extending direction; and an outer baffle disposed on the outer circumferential side of the pipe and configured to partition the inter-membrane space in the extending direction. Since the baffle of the degassing module includes: the inner baffle disposed on the inner circumferential side of the pipe; and the outer baffle disposed on the outer circumferential side of the pipe, the baffle can be disposed without dividing the pipe in the extending direction.

The partition unit includes: a first sealing unit disposed at a first end on one side of a hollow fiber membrane group in the extending direction; and a second sealing unit disposed at a second end on the other side of the hollow fiber membrane group in the extending direction, and the entire region which excludes the plurality of hollow fiber membranes and is between the pipe and the housing in the perpendicular section perpendicular to the extending direction is filled with each of the first sealing unit and the second sealing unit, and the plurality of holes of the pipe may be formed between the first sealing unit and the second sealing unit in the extending direction. In the degassing module, the entire region which excludes the plurality of hollow fiber membranes and is between the pipe and the housing in the perpendicular section perpendicular to the extending direction is filled with each of the first sealing unit and the second sealing unit, and the plurality of holes of the pipe are formed between the first sealing unit and the second sealing unit. Therefore, the region in the housing can be partitioned into an internal region and an external region by the first sealing unit and the second sealing unit. The first sealing unit and the second sealing unit are disposed at the first end on one side and at the second end on the other side of the hollow fiber membrane group in the extending direction, thus the liquid can be brought into contact with the plurality of hollow fiber membranes in a long range in the extending direction.

The air intake port may include: a first air intake port formed on the opposite side of the second sealing unit with respect to the first sealing unit in the extending direction; and a second air intake port formed on the opposite side of the first sealing unit with respect to the second sealing unit in the extending direction. In the degassing module, the first air intake port and the second air intake port are formed outward of the first sealing unit and the second sealing unit in the extending direction, thus air can be sucked from the inner circumferential side space of each of the plurality of hollow fiber membranes through both ends of the plurality of hollow fiber membranes. Therefore, the degassing efficiency of the liquid can be improved.

A method of degassing liquid according to the present invention is such that air is sucked from the internal region through the air intake port, and liquid is supplied from the liquid supply port to the in-pipe flow path in one of the degassing modules described above. In the method of degassing liquid, the liquid is degassed using one of the degassing modules described above, thus the pressure loss of the liquid can be reduced.

### Advantageous Effects of Invention

According to the present invention, the pressure loss of the liquid can be reduced.

### Brief Description of Drawings

[Fig. 1] Fig. 1 is a schematic sectional view of a degassing module according to an embodiment.
[Fig. 2] Fig. 2 is a schematic sectional view taken along line II-II illustrated in Fig. 1.
[Fig. 3] Fig. 3 is an enlarged schematic sectional view of part of the degassing module illustrated in Fig. 1.
[Fig. 4] Fig. 4 is an enlarged schematic sectional view of part of the degassing module illustrated in Fig. 1.
[Fig. 5] Fig. 5 is an enlarged schematic sectional view of part of the degassing module illustrated in Fig. 1.
[Fig. 6] Fig. 6 is an enlarged schematic sectional view of part of the degassing module illustrated in Fig. 1.
[Fig. 7] Fig. 7 is a schematic sectional view illustrating an example of a method of forming a baffle and a supporter.
[Fig. 8] Fig. 8 is a schematic sectional view illustrating the example of the method of forming the baffle and the supporter.
[Fig. 9] Fig. 9 is a graph showing a result of measurement of pressure loss in Comparative Example 1.
[Fig. 10] Fig. 10 is a graph showing a result of measurement of pressure loss in Example 1 and Comparative Example 1.

### Description of Embodiments

Hereinafter, a degassing module and a method of degassing liquid in an embodiment will be described with reference to the drawings. Note that the same or equivalent components in the entire drawings are labeled with the same symbol, and a redundant description is omitted.

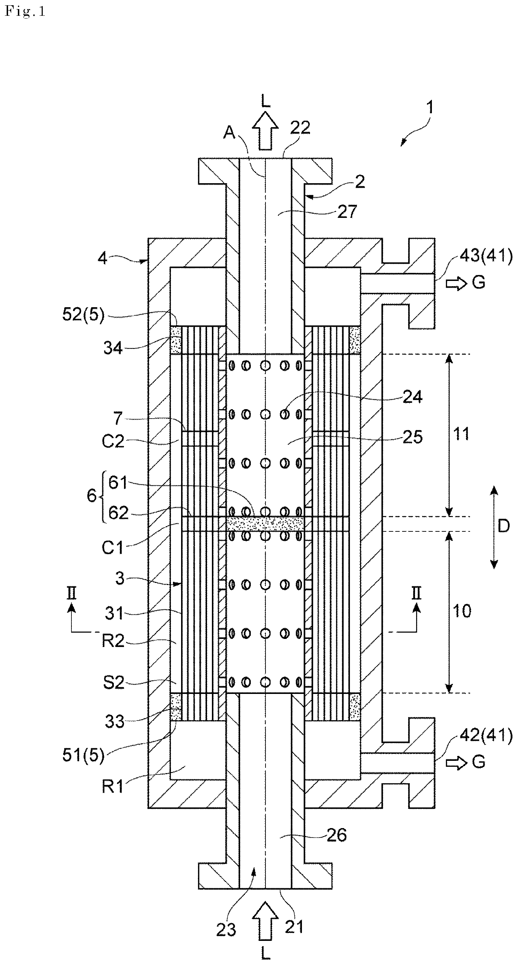

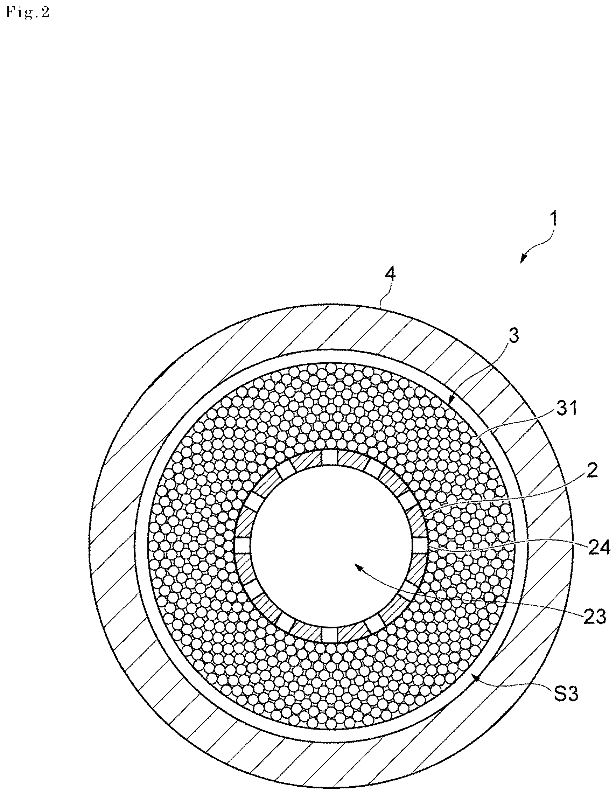

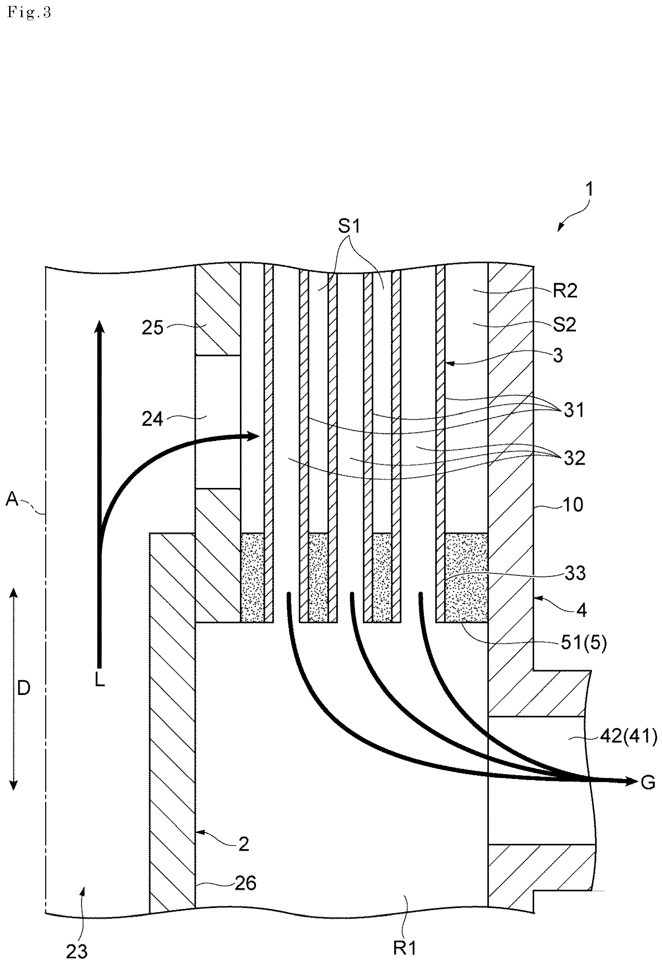

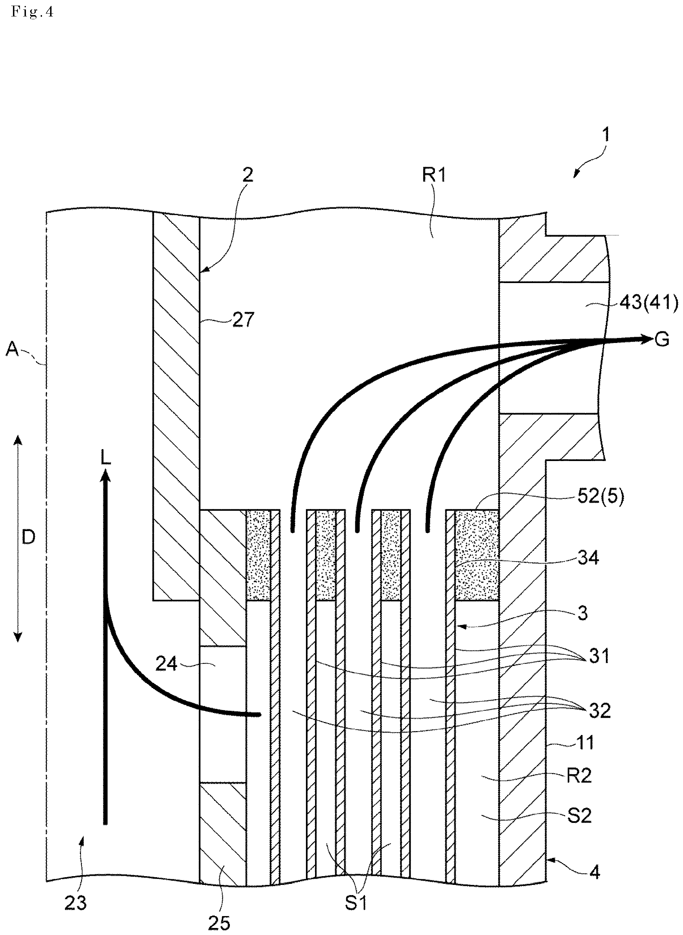

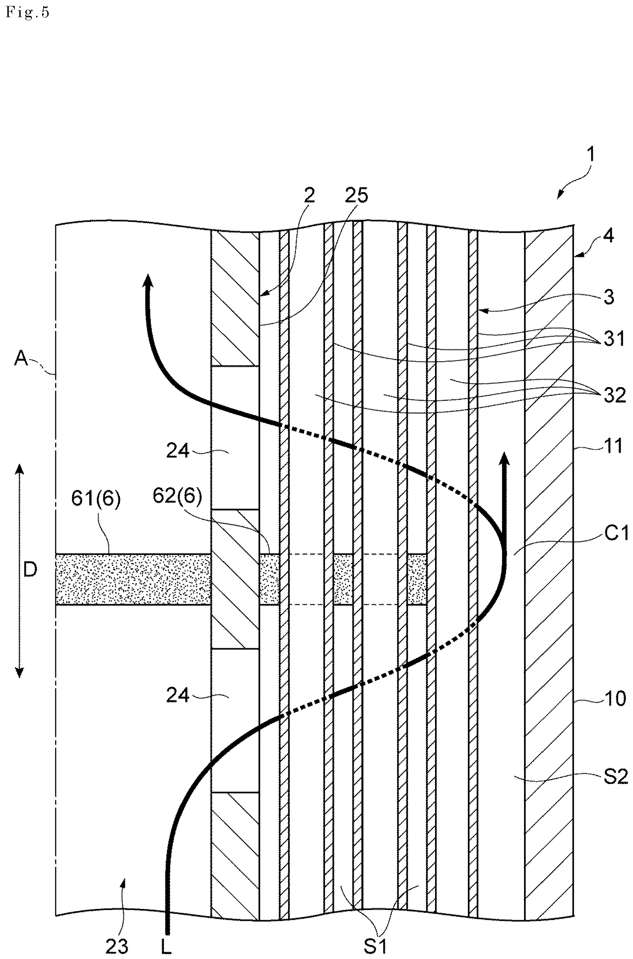

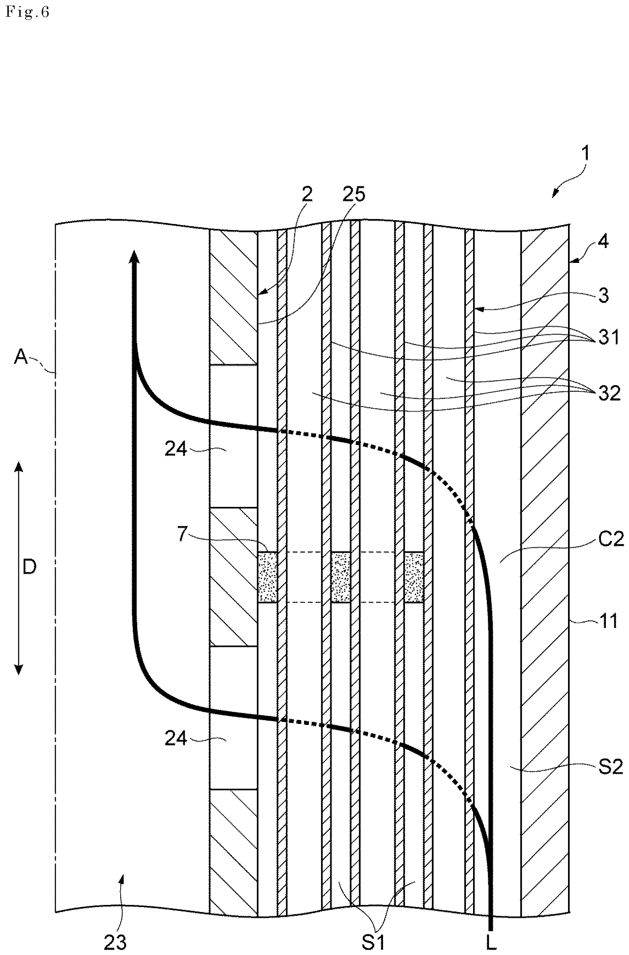

Fig. 1 is a schematic sectional view of a degassing module according to an embodiment. Fig. 2 is a schematic sectional view taken along line II-II illustrated in Fig. 1. Fig. 3 to Fig. 6 are each an enlarged schematic sectional view of part of the degassing module illustrated in Fig. 1. As illustrated in Fig. 1 to Fig. 6, a degassing module 1 according to the embodiment is a module for degassing liquid L. The liquid L degassed by the degassing module 1 is not limited to specific liquid, and may be, for example, water such as seawater, drinking water, pure water, and ultrapure water, water solution in which ammonium sulfate, surface-active agent, or the like is dissolved, an organic solvent such as alcohol and hydrocarbon, and ionic liquid.

The degassing module 1 includes a pipe 2, a hollow fiber membrane group 3, a housing 4, a partition unit 5, a baffle 6, and a supporter 7.

The pipe 2 is a cylindrical member linearly extending along a central axis A. The direction in which the pipe 2 extends cylindrically, in other words, the direction of the central axis A is referred to as an extending direction D. The pipe 2 forms an in-pipe flow path 23 having a liquid supply port 21 and a liquid discharge port 22. The in-pipe flow path 23 is a flow path formed by the inner circumferential surface of the pipe 2, the flow path allowing the liquid L to flow therethrough.

The pipe 2 includes a plurality of holes 24 that allow the in-pipe flow path 23 to be open. The plurality of holes 24 are holes for outputting the liquid L from the in-pipe flow path 23 to the outside of the pipe 2 as well as for inputting the liquid L from the outside of the pipe 2 to the in-pipe flow path 23.

The pipe 2 includes a hole formation part 25, a first hole non-formation part 26, and a second hole non-formation part 27. The hole formation part 25 is a part in which the plurality of holes 24 are formed. The first hole non-formation part 26 and the second hole non-formation part 27 are parts in which the plurality of holes 24 are not formed. The hole formation part 25 is located in the central part of the pipe 2 in the extending direction D. The first hole non-formation part 26 is adjacent to the hole formation part 25 on the side thereof closer to the liquid supply port 21 in the extending direction D. The second hole non-formation part 27 is adjacent to the hole formation part 25 on the side thereof closer to the liquid discharge port 22 in the extending direction D.

The inner diameter and the outer diameter of the hole formation part 25, the first hole non-formation part 26, and the second hole non-formation part 27 are not limited to specific ones. For example, from the viewpoint of increasing the total area of the plurality of holes 24, the inner diameter and the outer diameter of the hole formation part 25 may be larger than the inner diameters and the outer diameters of the first hole non-formation part 26 and the second hole non-formation part 27. For example, the hole formation part 25, the first hole non-formation part 26, and the second hole non-formation part 27 are separate members, and the pipe 2 may be formed by inserting the first hole non-formation part 26 and the second hole non-formation part 27 having a small diameter into both ends of the hole formation part 25 having a large diameter.

The hollow fiber membrane group 3 is formed by disposing a plurality of hollow fiber membranes 31 on the outer circumferential side of the pipe 2 so that the plurality of hollow fiber membranes 31 cover the plurality of holes 24. In other words, the hollow fiber membrane group 3 is formed by the plurality of hollow fiber membranes 31 that are disposed on the outer circumferential side of the pipe 2 to cover the plurality of holes 24.

Each of the plurality of hollow fiber membranes 31 is a hollow fiber membrane that allows gas G to pass therethrough but does not allow liquid L to pass therethrough. The material, membrane shape, membrane morphology, and the like of each of the plurality of hollow fiber membranes 31 are not limited to specific ones. The material for the plurality of hollow fiber membranes 31 includes, for example, a polyolefin-based resin such as polypropylene, polyethylene, and polymethylpentene, a silicon-based resin such as polydimethylsiloxane and a copolymer thereof, and a fluorine-based resin such as PTFE and vinylidene fluoride. The membrane shape (the shape of sidewall) of each of the plurality of hollow fiber membranes 31 includes, for example, a porous membrane, a microporous membrane, and a homogeneous membrane without porosity (non-porous membrane). The membrane morphology of each of the plurality of hollow fiber membranes 31 includes, for example, a symmetric membrane (homogeneous membrane) in which the chemical or physical structure of the entire membrane is homogeneous, and an asymmetric membrane (heterogeneous membrane) in which the chemical or physical structure of the membrane varies within the membrane. An asymmetric membrane (heterogeneous membrane) is a membrane having a non-porous dense layer and porosity. In this case, the dense layer may be formed anywhere in the membrane, such as in a surface layer portion of the membrane, or inside the porous membrane. The heterogeneous membrane also includes a composite membrane with different chemical structures, and a multilayer structure membrane such as a three-layer structure membrane. Particularly, a heterogeneous membrane using a poly (4-methyl pentene-1) resin has a dense layer that blocks the liquid L, thus is particularly preferable. For the use of an external perfusion system, it is preferable that the dense layer be formed on the outer surface.

The outer diameter of each of the plurality of hollow fiber membranes 31 is not limited to a specific diameter. From the viewpoint of increasing the membrane area, the outer diameter of each of the plurality of hollow fiber membranes 31 may be, for example, 500 um or less, preferably 350 um or less, more preferably 250 um or less. In contrast, from the viewpoint of preventing breakage, the outer diameter of each of the plurality of hollow fiber membranes 31 may be, for example, 50 um or greater, preferably 150 µm or greater, more preferably 200 um or greater.

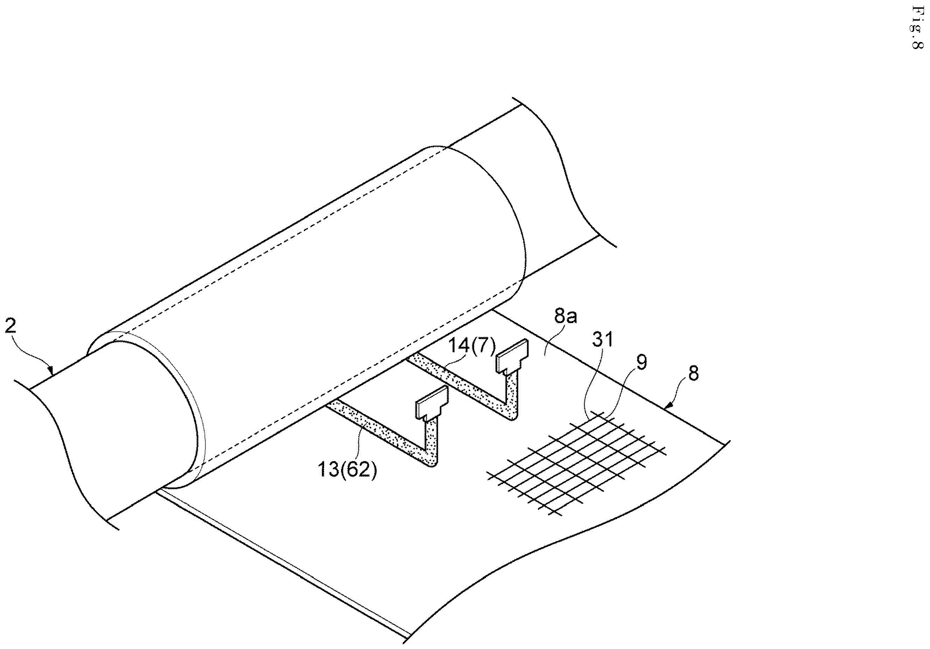

The hollow fiber membrane group 3 is disposed on the outer circumferential side of the hole formation part 25 of the pipe 2, and is not disposed on the outer circumferential side of the first hole non-formation part 26 or the second hole non-formation part 27 of the pipe 2. The hollow fiber membrane group 3 is formed in a substantially cylindrical shape so as to surround the hole formation part 25. The hollow fiber membrane group 3 is formed by hollow fiber membrane fabric 8 (see Fig. 8) which is woven in, for example, a blind shape. The hollow fiber membrane fabric 8 is formed by weaving the plurality of hollow fiber membranes 31 serving as the wefts, and the warps 9. In the hollow fiber membrane fabric 8, the plurality of hollow fiber membranes 31 are arranged in a blind shape. The interval between adjacent hollow fiber membranes 31 can be adjusted by, for example, the thickness of the warps 9 or the way the hollow fiber membrane fabric 8 is woven.

In the hollow fiber membrane group 3, an inter-membrane space S1, through which the liquid L can flow, is formed between the plurality of hollow fiber membranes 31 (between adjacent hollow fiber membranes 31). The inter-membrane space S1 is also formed between the plurality of hollow fiber membranes 31 in the circumferential direction of the pipe 2, and is also formed between the plurality of hollow fiber membranes 31 in the circumferential direction of the pipe 2.

The housing 4 is connected to the outer circumferential surface of the pipe 2 and stores the hollow fiber membrane group 3. The housing 4 is formed in a cylindrical shape extending in the extending direction D of the pipe 2. Both ends of the housing 4 in the extending direction D are hermetically connected to the outer circumferential surface of the pipe 2. The connection of the housing 4 to the pipe 2 can be performed by, for example, welding, or adhering. The both ends of the pipe 2 may not project from the housing 4; however, from the viewpoint of easiness of connection of other members to the pipe 2, in this embodiment, the both ends of the pipe 2 project from the housing 4.

In the housing 4, an air intake port 41 is formed. The air intake port 41 is an opening to suck air from the housing 4. The air intake port 41 includes a first air intake port 42 and a second air intake port 43. Each of the first air intake port 42 and the second air intake port 43 is an opening to suck air from the housing 4. The first air intake port 42 and the second air intake port 43 are connected to, for example, a suction device (not illustrated) such as a vacuum pump.

In the housing 4, a liquid flow space S2 is formed. The liquid flow space S2 is a space between the hollow fiber membrane group 3 and the housing 4, the space allowing the liquid L to flow therethrough. The liquid flow space S2 is a space formed between the hollow fiber membrane group 3 and the housing 4 in at least an unused state of the degassing module 1. Therefore, in an unused state of the degassing module 1, the hollow fiber membrane group 3 is not in contact with the inner circumferential surface of the housing 4. Note that after the degassing module 1 is used, the hollow fiber membrane group 3 may be in contact with the inner circumferential surface of the housing 4 due to swelling of the plurality of hollow fiber membranes 31.

The partition unit 5 partitions the region in the housing 4 into an internal region R1 and an external region R2. The internal region R1 is a region including an inner circumferential side space 32 of each of the plurality of hollow fiber membranes 31. The external region R2 is a region including the inter-membrane space S1. Therefore, each of the plurality of hollow fiber membranes 31 is a boundary between the internal region R1 and the external region R2. Each of the plurality of hollow fiber membranes 31 prevents passage of the liquid L from the external region R2 to the internal region R1, and allows passage of the gas G (such as dissolved gas in the liquid L or air bubbles contained in the liquid L) from the external region R2 to the internal region R1.

The partition unit 5 includes a first sealing unit 51, and a second sealing unit 52. The first sealing unit 51 is disposed at a first end 33 on one side of the hollow fiber membrane group 3 in the extending direction D. The first end 33 is an end closer to the liquid supply port 21 in the extending direction D. The first end 33 of the hollow fiber membrane group 3 is fixed to the outer circumferential surface of the pipe 2 and the inner circumferential surface of the housing 4 by the first sealing unit 51. The second sealing unit 52 is disposed at a second end 34 on the other side of the hollow fiber membrane group 3 in the extending direction D. The second end 34 is an end closer to the liquid discharge port 22 in the extending direction D. The second end 34 of the hollow fiber membrane group 3 is fixed to the outer circumferential surface of the pipe 2 and the inner circumferential surface of the housing 4 by the second sealing unit 52. The first sealing unit 51 and the second sealing unit 52 are made of, for example, resin. The resin used for the first sealing unit 51 and the second sealing unit 52 includes, for example, an epoxy resin, a urethane resin, an ultraviolet curable resin, and a polyolefin resin such as polyethylene and polypropylene.

The entire region which excludes the plurality of hollow fiber membranes 31 and is between the pipe 2 and the housing 4 in a perpendicular section perpendicular to the extending direction D is filled with each of the first sealing unit 51 and the second sealing unit 52. In other words, a region between the pipe 2 and the hollow fiber membrane group 3, a region between the plurality of hollow fiber membranes 31, and a region between the hollow fiber membrane group 3 and the housing 4 are filled with each of the first sealing unit 51 and the second sealing unit 52. The inner circumferential side space 32 of each of the plurality of hollow fiber membranes 31 is open from the first sealing unit 51 toward the liquid supply port 21, and is open from the second sealing unit 52 toward the liquid discharge port 22.

The first sealing unit 51 is disposed between the hole formation part 25 and the first hole non-formation part 26 in the extending direction D. The second sealing unit 52 is disposed between the hole formation part 25 and the second hole non-formation part 27 in the extending direction D. In other words, the plurality of holes 24 of the pipe 2 are formed between the first sealing unit 51 and the second sealing unit 52 in the extending direction D. Thus, the region between the pipe 2 and the housing 4, and on the side of the first sealing unit 51, closer to the liquid supply port 21 is the internal region R1. Also, the region between the pipe 2 and the housing 4, and on the side of the second sealing unit 52, closer to the liquid discharge port 22 is the internal region R1.

The first air intake port 42 is formed on the opposite side of the second sealing unit 52 with respect to the first sealing unit 51 in the extending direction D, that is, the first air intake port 42 is disposed on the side of the first sealing unit 51, closer to the liquid supply port 21 in the extending direction D. The first air intake port 42 is connected to the internal region R1 which is between the pipe 2 and the housing 4, and located on the side of the first sealing unit 51, closer to the liquid supply port 21. The second air intake port 43 is formed on the opposite side of the first sealing unit 51 with respect to the second sealing unit 52 in the extending direction D, that is, the second air intake port 43 is disposed on the side of the second sealing unit 52, closer to the liquid discharge port 22 in the extending direction D. The second air intake port 43 communicates with the internal region R1 which is between the pipe 2 and the housing 4, and located on the side of the second sealing unit 52, closer to the liquid discharge port 22.

The baffle 6 is disposed between the first sealing unit 51 and the second sealing unit 52 in the extending direction D so that the liquid L supplied to the liquid supply port 21 is diverted, and brought into contact with the plurality of hollow fiber membranes 31. Here, the region of the degassing module 1 between the first sealing unit 51 and the baffle 6 in the extending direction D is referred to as an upstream part 10, and the region of the degassing module 1 between the baffle 6 and the second sealing unit 52 in the extending direction D is referred to as a downstream part 11.

The baffle 6 partitions the in-pipe flow path 23 and the inter-membrane space S1 in the extending direction D. In other words, the in-pipe flow path 23 is partitioned by the baffle 6 in the extending direction D. In addition, the inter-membrane space S1 is partitioned by the baffle 6 in the extending direction D. Thus, in the upstream part 10, the liquid L supplied from the liquid supply port 21 to the in-pipe flow path 23 flows out from the pipe 2, passes through the inter-membrane space S1, and flows through a baffle clearance C1 between the baffle 6 and the housing 4, and in the downstream part 11, the liquid L passes through the inter-membrane space S1, and enters the pipe 2.

The position of the baffle 6 in the extending direction D can be any position between the first sealing unit 51 and the second sealing unit 52. For example, from the viewpoint of reducing the pressure loss of the liquid L when the liquid L is diverted at the baffle 6, the baffle 6 can be disposed in the central part when the range between the first sealing unit 51 and the second sealing unit 52 is divided into three in the extending direction D.

The baffle 6 includes an inner baffle 61, and an outer baffle 62. The inner baffle 61 is disposed on the inner circumferential side of the pipe 2 to partition the in-pipe flow path 23 in the extending direction D. The outer baffle 62 is disposed on the outer circumferential side of the pipe 2 to partition at least part of the inter-membrane space S1 in the extending direction D.

The inner baffle 61 may completely partition the in-pipe flow path 23 in the extending direction D, or may incompletely partition the in-pipe flow path 23 in the extending direction D. In other words, the inner baffle 61 may completely block the in-pipe flow path 23 to inhibit passage of the liquid L from the in-pipe flow path 23 in the upstream part 10 to the in-pipe flow path 23 in the downstream part 11. Alternatively, the inner baffle 61 may partially block the in-pipe flow path 23 to allow passage of the liquid L from the in-pipe flow path 23 in the upstream part 10 to the in-pipe flow path 23 in the downstream part 11. Even when the inner baffle 61 partially blocks the in-pipe flow path 23, passage of the liquid L from the in-pipe flow path 23 in the upstream part 10 to the in-pipe flow path 23 in the downstream part 11 is partially inhibited by the inner baffle 61, thus the liquid L supplied to the liquid supply port 21 can be diverted, and brought into contact with the plurality of hollow fiber membranes 31.

The inner baffle 61 is made of, for example, resin. The resin used for the inner baffle 61 includes, for example, an urethane-based resin such as polyurethane (PU) and thermoplastic polyurethane (TPU); polycarbonate (PC); a vinyl chloride-based resin such as polyvinyl chloride (PVC) and vinyl chloride-vinyl acetate copolymer resin; an acrylic-based resin such as polyacrylic acid, polymethacrylic acid, polymethyl acrylate, polymethyl methacrylate (PMMA), and polyethyl methacrylate; a polyester-based resin such as polyethylene terephthalate (PET), polybutylene terephthalate, polytrimethylene terephthalate, polyethylene naphthalate, and polybutylene naphthalate; a polyamide-based resin such as nylon (registered trademark); a polystyrene resin such as polystyrene (PS), imide modified polystyrene, acrylonitrile butadiene styrene (ABS) resin, imide modified ABS resin, styrene acrylonitrile copolymerization (SAN) resin, and acrylonitrile ethylene-propylene-diene styrene (AES) resin; an olefin-based resin such as a polyethylene (PE) resin, a polypropylene (PP) resin, a polymethylpentene (PMP) resin, and a cycloolefin resin; a cellulose-based resin such as nitrocellulose and cellulose acetate; a silicone-based resin; a fluorine resin; a thermoplastic resin such as a polyphenylene ether (PPE)-based resin, an epoxy (EPOXY)-based resin such as a bisphenol A type epoxy resin, a bisphenol F type epoxy resin, an isocyanurate epoxy resin, and a hydantoin-based epoxy resin; an amino resin such as a melamine resin and a urea resin; a phenolic resin; and a thermosetting resin such as an unsaturated polyester-based resin. Among these, PP, PE, EPOXY, PC, ABS, PPE, PMMA, PMP, and PU are preferable.

The outer baffle 62 may completely partition the inter-membrane space S1 in the extending direction D, or may incompletely partition the inter-membrane space S1 in the extending direction D. In other words, the outer baffle 62 may completely block the inter-membrane space S1 to inhibit passage of the liquid L from the inter-membrane space S1 in the upstream part 10 to the inter-membrane space S1 in the downstream part 11. Alternatively, the outer baffle 62 may partially block the inter-membrane space S1 to allow passage of the liquid L from the inter-membrane space S1 in the upstream part 10 to the inter-membrane space S1 in the downstream part 11. Even when the outer baffle 62 partially blocks the inter-membrane space S1, passage of the liquid L from the inter-membrane space S1 in the upstream part 10 to the inter-membrane space S1 in the downstream part 11 is partially inhibited by the outer baffle 62, thus the liquid L supplied to the liquid supply port 21 can be diverted, and brought into contact with the plurality of hollow fiber membranes 31.

The outer baffle 62 is spaced away from the housing 4. However, if the baffle clearance C1 is formed even in part of the space between the outer baffle 62 and the housing 4, the outer baffle 62 may be in contact with the housing 4. Although the outer baffle 62 is not disposed in the liquid flow space S2, if the baffle clearance C1 is formed even in part of the space between the outer baffle 62 and the housing 4, the outer baffle 62 may be disposed in the liquid flow space S2.

The outer baffle 62 is made of, for example, resin. The resin used for the outer baffle 62 includes, for example, an urethane-based resin such as polyurethane (PU) and thermoplastic polyurethane (TPU); polycarbonate (PC); a vinyl chloride-based resin such as polyvinyl chloride (PVC) and vinyl chloride-vinyl acetate copolymer resin; an acrylic-based resin such as polyacrylic acid, polymethacrylic acid, polymethyl acrylate, polymethyl methacrylate (PMMA), and polyethyl methacrylate; a polyester-based resin such as polyethylene terephthalate (PET), polybutylene terephthalate, polytrimethylene terephthalate, polyethylene naphthalate, and polybutylene naphthalate; a polyamide-based resin such as nylon (registered trademark); a polystyrene resin such as polystyrene (PS), imide modified polystyrene, acrylonitrile butadiene styrene (ABS) resin, imide modified ABS resin, styrene acrylonitrile copolymerization (SAN) resin, and acrylonitrile ethylene-propylene-diene styrene (AES) resin; an olefin-based resin such as a polyethylene (PE) resin, a polypropylene (PP) resin, a polymethylpentene (PMP) resin, and a cycloolefin resin; a cellulose-based resin such as nitrocellulose and cellulose acetate; a silicone-based resin; a fluorine resin; a thermoplastic resin such as a polyphenylene ether (PPE)-based resin, an epoxy (EPOXY)-based resin such as a bisphenol A type epoxy resin, a bisphenol F type epoxy resin, an isocyanurate epoxy resin, and a hydantoin-based epoxy resin; an amino resin such as a melamine resin and a urea resin; a phenolic resin; and a thermosetting resin such as an unsaturated polyester-based resin. Among these, PP, PE, PVC, EPOXY, PMP, and PU are preferable.

The supporter 7 is disposed on the side of the baffle 6, closer to the liquid discharge port 22 in the extending direction D, and configured to support at least part of the plurality of hollow fiber membranes 31 against the pipe 2. In the downstream part 11, the plurality of hollow fiber membranes 31 are pressed toward the pipe 2 by the flow of the liquid L that flows into the pipe 2, and, for example, the hollow fiber membranes 31 on the outer circumferential side enter between the hollow fiber membranes 31 on the inner circumferential side, thus the inter-membrane space S1 serving as a flow path for the liquid L is narrowed. In particular, when each of the plurality of hollow fiber membranes 31 is a heterogeneous membrane having a dense layer, or has an outer diameter of 500 um or less, 350 um or less, or 250 um or less, the above-mentioned tendency increases. Thus, in the downstream part 11, the supporter 7 supports at least part of the plurality of hollow fiber membranes 31 against the pipe 2 so as to resist the flow of the liquid L that flows into the pipe 2.

The supporter 7 may support all of the plurality of hollow fiber membranes 31 against the pipe 2, or may support only part of the plurality of hollow fiber membranes 31 against the pipe 2. In this embodiment, from the viewpoint of further preventing the inter-membrane space S1 from becoming narrow, the supporter 7 supports all of the plurality of hollow fiber membranes 31 against the pipe 2.

As long as the supporter 7 can support at least part of the plurality of hollow fiber membranes 31, the supporter 7 may have any shape, any structure, and any other structural factor. For example, the supporter 7 is directly or indirectly connected to at least part of the plurality of hollow fiber membranes 31 and the pipe 2. The indirect connection of the supporter 7 to at least part of the plurality of hollow fiber membranes 31 and the pipe 2 refers to, for example, a situation in which another member is disposed between the supporter 7, and at least part of the plurality of hollow fiber membranes 31 and the pipe 2. The entire region between the pipe 2 and the hollow fiber membrane group 3, and the entire region of the inter-membrane space S1 may be filled with the supporter 7. Alternatively, only part of the pipe 2 and the hollow fiber membrane group 3, and part of the inter-membrane space S1 may be filled with the supporter 7.

The supporter 7 is spaced away from the housing 4, and a supporter clearance C2 is formed between the supporter 7 and the housing 4. However, when movement of the liquid L from the liquid supply port 21 side (the baffle 6 side) to the liquid discharge port 22 side (the second hole non-formation part 27 side) for the supporter 7 is not prevented, or when the supporter clearance C2 is formed even in part of the space between the supporter 7 and the housing 4, the supporter 7 may be in contact with the housing 4. In this embodiment, from the viewpoint of reducing the pressure loss of the liquid L and increasing the duration of contact between the plurality of hollow fiber membranes 31 and the liquid L, the supporter 7 is spaced away from the housing 4.

The supporter 7 is not disposed in the liquid flow space S2. However, when movement of the liquid L from the liquid supply port 21 side (the baffle 6 side) to the liquid discharge port 22 side (the second hole non-formation part 27 side) for the supporter 7 is not prevented, or when the supporter clearance C2 is formed even in part of the space between the supporter 7 and the housing 4, the supporter 7 may be disposed in the liquid flow space S2. In this embodiment, from the viewpoint of reducing the pressure loss of the liquid L and increasing the duration of contact between the plurality of hollow fiber membranes 31 and the liquid L, the supporter 7 is not disposed in the liquid flow space S2.

The plurality of holes 24 of the pipe 2 may be formed at both the side of the supporter 7, closer to the liquid supply port 21 (the baffle 6 side) in the extending direction D, and the side of the supporter 7, closer to the liquid discharge port 22 (the second hole non-formation part 27 side) in the extending direction D, or formed only at one side. In this embodiment, from the viewpoint of improving the degassing performance for the liquid L, the plurality of holes 24 of the pipe 2 are formed at both the side of the supporter 7, closer to the liquid supply port 21 (the baffle 6 side) in the extending direction D, and the side of the supporter 7, closer to the liquid discharge port 22 (the second hole non-formation part 27 side) in the extending direction D.

The position of the supporter 7 in the extending direction D can be any position between the baffle 6 and the second hole non-formation part 27. For example, from the viewpoint of efficiently supporting the plurality of hollow fiber membranes 31, the supporter 7 can be disposed in the central part when the range between the baffle 6 and the second hole non-formation part 27 is divided into three in the extending direction D.

The supporter 7 is made of, for example, resin. The resin used for the supporter 7 includes, for example, an urethane-based resin such as polyurethane (PU) and thermoplastic polyurethane (TPU); polycarbonate (PC); a vinyl chloride-based resin such as polyvinyl chloride (PVC) and vinyl chloride-vinyl acetate copolymer resin; an acrylic-based resin such as polyacrylic acid, polymethacrylic acid, polymethyl acrylate, polymethyl methacrylate (PMMA), and polyethyl methacrylate; a polyester-based resin such as polyethylene terephthalate (PET), polybutylene terephthalate, polytrimethylene terephthalate, polyethylene naphthalate, and polybutylene naphthalate; a polyamide-based resin such as nylon (registered trademark); a polystyrene resin such as polystyrene (PS), imide modified polystyrene, acrylonitrile butadiene styrene (ABS) resin, imide modified ABS resin, styrene acrylonitrile copolymerization (SAN) resin, and acrylonitrile ethylene-propylene-diene styrene (AES) resin; an olefin-based resin such as a polyethylene (PE) resin, a polypropylene (PP) resin, a polymethylpentene (PMP) resin, and a cycloolefin resin; a cellulose-based resin such as nitrocellulose and cellulose acetate; a silicone-based resin; a fluorine resin; a thermoplastic resin such as a polyphenylene ether (PPE)-based resin, an epoxy (EPOXY)-based resin such as a bisphenol A type epoxy resin, a bisphenol F type epoxy resin, an isocyanurate epoxy resin, and a hydantoin-based epoxy resin; an amino resin such as a melamine resin and a urea resin; a phenolic resin; and a thermosetting resin such as an unsaturated polyester-based resin. Among these, PP, PE, PVC, EPOXY, PMP, and PU are preferable.

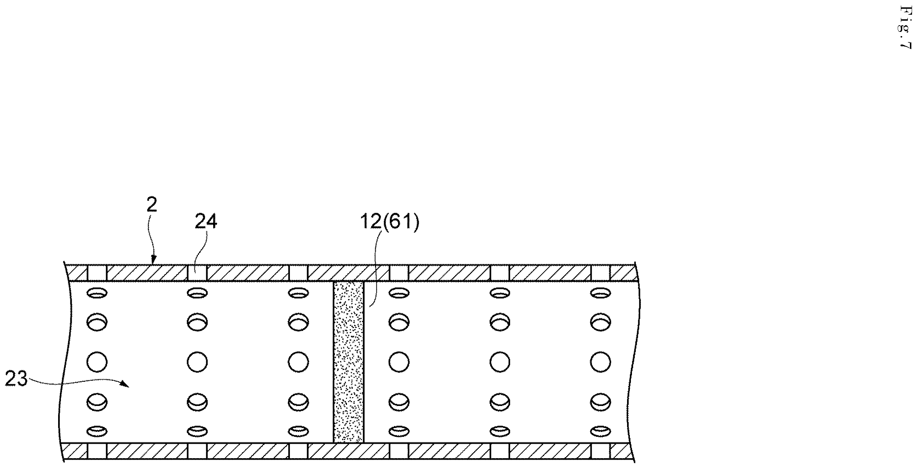

Fig. 7 and Fig. 8 are schematic sectional views illustrating an example of a method of forming the baffle 6 and the supporter 7. When the baffle 6 and the supporter 7 are formed, as illustrated in Fig. 7, first, a disc-shaped member 12 made of resin is fitted into the in-pipe flow path 23 of the pipe 2. The disc-shaped member becomes the inner baffle 61.

Next, as illustrated in Fig. 7 and Fig. 8, the hollow fiber membrane fabric 8 is wound around the pipe 2 so as to cover the plurality of holes 24 of the pipe 2. As mentioned above, the hollow fiber membrane fabric 8 is formed by weaving the plurality of hollow fiber membranes 31 serving as wefts with the warps 9. In this process, when a fabric inner surface 8a is the surface of the hollow fiber membrane fabric 8, to be wound around the pipe 2, a first molten resin 13 is applied to the position corresponding to the outer baffle 62 of the fabric inner surface 8a, and a second molten resin 14 is applied to the position corresponding to the supporter 7 of the fabric inner surface 8a. The hollow fiber membrane fabric 8 with the first molten resin 13 and the second molten resin 14 applied thereto is wound around the pipe 2. The hollow fiber membrane fabric 8 on the inner layer side and the hollow fiber membrane fabric 8 on the outer layer side are then impregnated with the first molten resin 13 and the second molten resin 14, and the positions corresponding to the outer baffle 62 and the supporter 7 are filled with the first molten resin 13 and the second molten resin 14. Subsequently, the first molten resin 13 and the second molten resin 14 cure, and the first molten resin 13 becomes the outer baffle 62, and the second molten resin 14 becomes the supporter 7.

Next, a method of degassing the liquid L using the degassing module 1 will be described.

Air is sucked from the internal region R1 through the first air intake port 42 and the second air intake port 43, and the liquid L is supplied from the liquid supply port 21 to the in-pipe flow path 23. Sucking air from the internal region R1 through the first air intake port 42 and the second air intake port 43 can be performed, for example, by attaching a suction device (not illustrated) such as a vacuum pump to the first air intake port 42 and the second air intake port 43, and activating the suction device. Sucking air from the internal region R1 through the first air intake port 42 and the second air intake port 43 achieves a decompressed state of the internal region R1 including the inner circumferential side space 32 of each of the plurality of hollow fiber membranes 31.

The liquid supplied to the in-pipe flow path 23 passes through the plurality of holes 24 formed in the pipe 2 in the upstream part 10 so as to bypass the baffle 6, flows out from the pipe 2, and passes through the inter-membrane space S1. At this point, a decompressed state is achieved in the inner circumferential side space 32 of each of the plurality of hollow fiber membranes 31, therefore the gas G such as dissolved gas in the liquid L, and air bubbles contained in the liquid L passes through each of the plurality of hollow fiber membranes 31, thus the liquid L is degassed. Subsequently, the liquid L passes through the baffle clearance C1, flows through the inter-membrane space S1 in the downstream part 11, and enters the pipe 2 through the plurality of holes 24 formed in the pipe 2. Also, at this point, a decompressed state is achieved in the inner circumferential side space 32 of each of the plurality of hollow fiber membranes 31, therefore the gas G such as dissolved gas in the liquid L, and air bubbles contained in the liquid L passes through each of the plurality of hollow fiber membranes 31, thus the liquid L is degassed. Subsequently, the degassed liquid L which has entered the pipe 2 is discharged through the liquid discharge port 22.

In this manner, with the degassing module 1 according to this embodiment, air is sucked from the internal region R1 through the first air intake port 42 and the second air intake port 43, and the liquid L is supplied from the liquid supply port 21 to the in-pipe flow path 23, thereby making it possible to degas the liquid L. The in-pipe flow path 23 and the inter-membrane space S1 are partitioned by the baffle 6 in the extending direction D. Thus, when the liquid L is supplied from the liquid supply port 21 to the in-pipe flow path 23, the liquid L flows out from the pipe 2 on the side of the baffle 6, closer to the liquid supply port 21, passes through the inter-membrane space S1, flows through the baffle clearance C1 between the baffle 6 and the housing 4, passes through the inter-membrane space S1, and flows into the pipe 2 again on the side of the baffle 6, closer to the liquid discharge port 22. In this manner, as compared to when the baffle 6 is not provided, the degassing performance can be improved by complicating the flow of the liquid L by the baffle 6.

Here, on the side of the baffle 6, closer to the liquid discharge port 22, the plurality of hollow fiber membranes 31 are pressed toward the pipe 2 by the flow of the liquid L that flows into the pipe 2 again crossing the baffle 6. However, the supporter 7 that supports at least part of the plurality of hollow fiber membranes 31 against the pipe 2 is disposed on the side of the baffle 6, closer to the liquid discharge port 22, that is, downstream of the baffle 6. The inter-membrane space S1 serving as a flow path for the liquid L is prevented from being narrowed due to, for example, entering of the hollow fiber membranes 31 on the outer circumferential side into between the hollow fiber membranes 31 on the inner circumferential side caused by the flow of the liquid L that flows into the pipe 2 again crossing the baffle 6. Thus, as compared to when no supporter 7 is disposed, the pressure loss of the liquid L can be reduced.

Since the supporter 7 supports all of the plurality of hollow fiber membranes 31 against the pipe 2 in the degassing module 1, it is possible to further prevent the inter-membrane space S1 serving as a flow path for liquid L from being narrowed by the flow of the liquid L that flows into the pipe 2 again crossing the baffle 6.

Since the supporter 7 is spaced away from the housing 4 in the degassing module 1, the liquid L which has crossed the baffle 6 can flow along the inner circumferential surface of the housing 4 until the liquid L crosses over the supporter 7. Consequently, on the side of the supporter 7, closer to the liquid discharge port 22, that is, downstream of the supporter 7, the area where the plurality of hollow fiber membranes 31 and the liquid L come into contact with each other can be expanded.

Since the baffle 6 is spaced away from the housing 4 in the degassing module 1, it is possible to reduce the pressure loss of the liquid L when the liquid L flows through the baffle clearance C1 between the baffle 6 and the housing 4.

Since the baffle 6 partitions the entire inter-membrane space S1 in the extending direction D in the degassing module 1, on the side of the baffle 6, closer to the liquid supply port 21, that is, upstream of the baffle 6, the liquid L which flows out from the pipe 2 can be passed to the outside of the hollow fiber membrane group 3. Thus, the duration of contact between the plurality of hollow fiber membranes 31 and the liquid L can be increased, therefore the degassing efficiency of the liquid L can be improved.

Since liquid flow space S2 is formed between the hollow fiber membrane group 3 and the housing 4 in the degassing module 1, the liquid L which has flown out from the pipe 2 can flow through the inter-membrane space S1 to enter the liquid flow space S2, and subsequently, from the liquid flow space S2, the liquid L can flow through the inter-membrane space S1 to enter the pipe 2. Thus, the pressure loss of the liquid L can be reduced while allowing the liquid L to be in contact with the plurality of hollow fiber membranes 31.

Since the supporter 7 is not disposed in the liquid flow space S2 in the degassing module 1, as compared to when the supporter 7 is disposed in the liquid flow space S2, the pressure loss of the liquid L which passes through the liquid flow space S2 can be reduced.

Since the baffle 6 of the degassing module 1 includes the inner baffle 61 disposed on the inner circumferential side of the pipe 2; and the outer baffle 62 disposed on the outer circumferential side of the pipe 2, the baffle 6 can be disposed without dividing the pipe 2 in the extending direction D.

In the degassing module 1, the entire region which excludes the plurality of hollow fiber membranes 31 and is between the pipe 2 and the housing 4 in the perpendicular section perpendicular to the extending direction D is filled with each of the first sealing unit 51 and the second sealing unit 52, and the plurality of holes 24 of the pipe 2 are formed between the first sealing unit 51 and the second sealing unit 52. Therefore, the region in the housing 4 can be partitioned into the internal region R1 and the external region R2 by the first sealing unit 51 and the second sealing unit 52. The first sealing unit 51 and the second sealing unit 52 are disposed at the first end 33 and the second end 34 of the hollow fiber membrane group 3 in the extending direction D, thus the liquid L can be brought into contact with the plurality of hollow fiber membranes 31 in a long range in the extending direction D.

In the degassing module 1, the first air intake port 42 and the second air intake port 43 are formed outward of the first sealing unit 51 and the second sealing unit 52 in the extending direction D, thus air can be sucked from the inner circumferential side space 32 of each of the plurality of hollow fiber membranes 31 through both ends of the plurality of hollow fiber membranes 31. Therefore, the degassing efficiency of the liquid L can be improved.

In the method of degassing liquid according to this embodiment, the liquid L is degassed using the degassing module 1 described above, thus the pressure loss of the liquid L can be reduced.

Although a preferred embodiment of the present invention has been described above, the present invention is not limited to the embodiment. For example, although the pipe and the housing have been described as separate members in the above embodiment, the pipe and the housing may be integrated if integration causes no problem in manufacturing.

### [Examples]

Next, Examples of the present invention will be described; however, the present invention is not limited to Examples below.

### (Experiment 1)

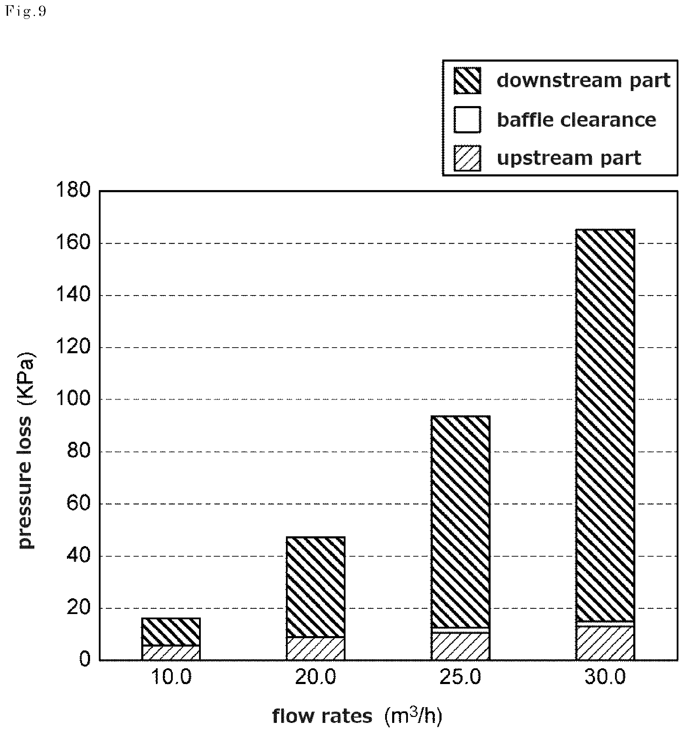

As Experiment 1, the pressure loss of liquid was measured using a degassing module not provided with a supporter in Comparative Example 1. The degassing module in Comparative Example 1 is the same as the degassing module 1 according to the embodiment except that no supporter is provided. In Experiment 1, the pressure loss of the liquid at three points, i.e., an upstream part, a baffle clearance between the baffle and the housing, and a downstream part was measured with varied flow rates of the liquid supplied to the degassing module. The result of measurement is shown in Fig. 9. Fig. 9 is a graph showing the result of measurement of the pressure loss in Comparative Example 1.

As shown in Fig. 9, the pressure loss of liquid in the upstream part and the downstream part was significantly larger than the pressure loss at the baffle clearance between the baffle and the housing. Also, the pressure loss of liquid in the downstream part was significantly larger than the pressure loss of liquid in the upstream part. From this result, it is probable that in the downstream part, the plurality of hollow fiber membranes are pressed toward the pipe by the flow of the liquid that enters the pipe, thus, for example, the hollow fiber membranes on the outer circumferential side enter between the hollow fiber membranes on the inner circumferential side, thereby reducing the inter-membrane space. As a result, the pressure loss of the liquid is increased.

### (Experiment 2)

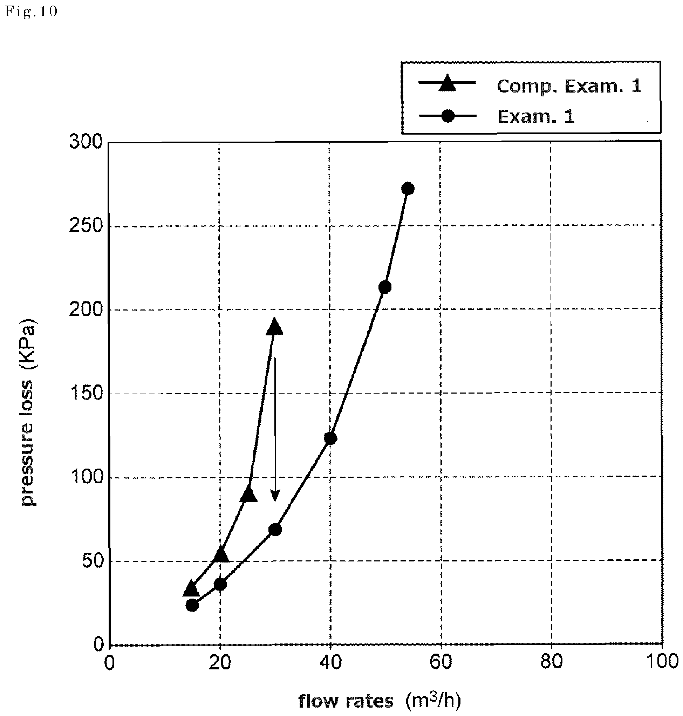

As Experiment 2, the pressure loss of liquid was measured using the degassing module in Comparative Example 1 and a degassing module in Example 1. The degassing module in Example 1 was the same as the degassing module 1 according to the above-described embodiment. In Experiment 2, the pressure loss of the liquid between the liquid supply port and the liquid discharge port of the degassing module was measured with varied flow rates of the liquid supplied to the degassing module. The result of measurement is shown in Fig. 10. Fig. 10 is a graph showing a result of measurement of pressure loss in Example 1 and Comparative Example 1.

As shown in Fig. 10, the pressure loss of liquid in the degassing module provided with a supporter in Example 1 was significantly smaller than the pressure loss of liquid in the degassing module not provided with a supporter in Comparative Example 1. For example, when the flow rate of the liquid supplied to the degassing module is 30 m³/h, the pressure loss of liquid of the degassing module in Example 1 is reduced by 60% or more with respect to the pressure loss of liquid of the degassing module in Comparative Example 1. From this result, it is probable that the pressure loss of the liquid can be reduced with the supporter provided. Reference Signs List

1 DEGASSING MODULE, 2 PIPE, 3 HOLLOW FIBER MEMBRANE GROUP, 4 HOUSING, 5 PARTITION UNIT, 6 BAFFLE, 7 SUPPORTER, 8 HOLLOW FIBER MEMBRANE FABRIC, 8a FABRIC INNER SURFACE, 9 WARP, 10 UPSTREAM PART, 11 DOWNSTREAM PART, 12 DISC-SHAPED MEMBER, 13 FIRST MOLTEN RESIN, 14 SECOND MOLTEN RESIN, 21 LIQUID SUPPLY PORT, 22 LIQUID DISCHARGE PORT, 23 IN-PIPE FLOW PATH, 24 HOLE, 25 HOLE FORMATION PART, 26 FIRST HOLE NON-FORMATION PART, 27 SECOND HOLE NON-FORMATION PART, 31 HOLLOW FIBER MEMBRANE, 32 INNER CIRCUMFERENTIAL SIDE SPACE , 33 FIRST END, 34 SECOND END, 41 AIR INTAKE PORT, 42 FIRST AIR INTAKE PORT, 43 SECOND AIR INTAKE PORT, 51 FIRST SEALING UNIT, 52 SECOND SEALING UNIT, 61 INNER BAFFLE, 62 OUTER BAFFLE, A CENTRAL AXIS, D EXTENDING DIRECTION, G GAS, L LIQUID, R1 INTERNAL REGION, R2 EXTERNAL REGION, S1 INTER-MEMBRANE SPACE, S2 LIQUID FLOW SPACE, C1 BAFFLE CLEARANCE, C2 SUPPORTER CLEARANCE

## Claims

1. A degassing module comprising:
a pipe including an in-pipe flow path having a liquid supply port and a liquid discharge port, the pipe having a plurality of holes that allow the in-pipe flow path to be open;
a hollow fiber membrane group formed by disposing a plurality of hollow fiber membranes on an outer circumferential side of the pipe so as to cover the plurality of holes;
a housing connected to an outer circumferential surface of the pipe and configured to store the hollow fiber membrane group;
a partition unit configured to partition a region in the housing into an internal region including an inner circumferential side space of each of the plurality of hollow fiber membranes, and an external region including an inter-membrane space between the plurality of hollow fiber membranes;
an air intake port of the housing, the air intake port communicating with the internal region;
a baffle configured to partition the in-pipe flow path and the inter-membrane space in an extending direction of the pipe; and
a supporter disposed on a side of the baffle, closer to the liquid discharge port in the extending direction, and configured to support at least part of the plurality of hollow fiber membranes against the pipe.

2. The degassing module according to Claim 1,
wherein the supporter is configured to support all of the plurality of hollow fiber membranes against the pipe.

3. The degassing module according to Claim 1 or 2,
wherein the supporter is spaced away from the housing.

4. The degassing module according to any one of Claims 1 to 3,
wherein the baffle is spaced away from the housing.

5. The degassing module according to any one of Claims 1 to 4,
wherein the baffle is configured to partition an entirety of the inter-membrane space in the extending direction.

6. The degassing module according to any one of Claims 1 to 5,
wherein a liquid flow space is formed between the hollow fiber membrane group and the housing, the liquid flow space allowing liquid to flow therethrough.

7. The degassing module according to Claim 6,
wherein the supporter is not disposed in the liquid flow space.

8. The degassing module according to any one of Claims 1 to 7,
wherein the baffle includes:
an inner baffle disposed on an inner circumferential side of the pipe and configured to partition the in-pipe flow path in the extending direction; and
an outer baffle disposed on the outer circumferential side of the pipe and configured to partition the inter-membrane space in the extending direction.

9. The degassing module according to any one of Claims 1 to 8,
wherein the partition unit includes:
a first sealing unit disposed at a first end on one side of the hollow fiber membrane group in the extending direction; and
a second sealing unit disposed at a second end on an other side of the hollow fiber membrane group in the extending direction,
an entire region which excludes the plurality of hollow fiber membranes and is between the pipe and the housing in a perpendicular section perpendicular to the extending direction is filled with each of the first sealing unit and the second sealing unit, and
the plurality of holes of the pipe are formed between the first sealing unit and the second sealing unit in the extending direction.

10. The degassing module according to Claim 9,
wherein the air intake port includes:
a first air intake port formed on an opposite side of the second sealing unit with respect to the first sealing unit in the extending direction; and
a second air intake port formed on an opposite side of the first sealing unit with respect to the second sealing unit in the extending direction.

11. A method of degassing liquid, comprising:
in the degassing module according to any one of Claims 1 to 10, sucking air from the internal region through the air intake port, and supplying liquid from the liquid supply port to the in-pipe flow path.
